# EUROPÄISCHE PATENTSCHRIFT

(11) **EP 3 019 367 B1**
(45) Veröffentlichungstag und Bekanntmachung des Hinweises auf die Patenterteilung: **04.11.2020**
(21) Anmeldenummer: 14802399.7
(22) Anmeldetag: 19.11.2014
(51) Int. Cl.: B60L 50/10, B60L 9/30, B60L 9/00

(54) **SCHALTUNGSANORDNUNG ZUM VERSORGEN EINES ANTRIEBS EINES FAHRZEUGS**
CIRCUIT ARRANGEMENT FOR SUPPLYING A DRIVE OF A VEHICLE
AGENCEMENT DE CIRCUITS POUR L'ALIMENTATION D'UN ENTRAÎNEMENT D'UN VÉHICULE

(30) Priorität: 02.12.2013 DE 102013224669
(43) Veröffentlichungstag der Anmeldung: 18.05.2016
(73) Patentinhaber: Siemens Mobility GmbH, 81739 München (DE)
(72) Erfinder: HÖSCHELER, Bernhard, 91058 Erlangen (DE)
(86) Internationale Anmeldenummer: PCT/EP2014/075003
(87) Internationale Veröffentlichungsnummer: WO 2015/082218

(56) Entgegenhaltungen:
- EP-A2- 1 226 994
- WO-A1-2013/114546
- DE-A1- 3 046 031
- DE-A1-102009 008 549
- DE-C1- 19 547 465
- Anonymous: "Electronic filter topology - Wikipedia, the free encyclopedia", , 20. Februar 2015 (2015-02-20), XP055178288, Gefunden im Internet: URL:http://en.wikipedia.org/wiki/Electroni c_filter_topology [gefunden am 2015-03-23]
- CHRISTOPH SCHAETZER ET AL: "Last Mile - die neue Funktion der TRAXX AC3 Lokomotiven", ELEKTRISCHE BAHNEN, OLDENBOURG INDUSTRIEVERLAG, MUNCHEN, DE, Bd. 110, Nr. 8-9, 1. August 2012 (2012-08-01), Seiten 432-442, XP001526070, ISSN: 0013-5437

## Beschreibung

Die Erfindung betrifft eine Schaltungsanordnung zum Versorgen eines Antriebs eines Fahrzeugs, insbesondere eines Schienenfahrzeugs mit wahlweise elektrischer Energie aus einem Energieversorgungsnetz oder aus einer netzunabhängigen Energieversorgungseinheit gemäß dem Oberbegriff des Anspruchs 1.

Im Stand der Technik sind Hybrid-Antriebssysteme für die Einspeisung elektrischer Energie aus einem Netz und bei Bedarf alternativ aus einer dieselelektrischen Einheit in einen Gleichspannungszwischenkreis bekannt. Aus dem Zwischenkreis werden Verbraucher des Schienenfahrzeugs, insbesondere ein Antriebsmotor und ein Hilfsbetrieb über einen Wechselrichter mit Energie versorgt.

DE 10 2009 008 549 A1 beschreibt eine entsprechende Anordnung zum Betreiben von Verbrauchern in einem Schienenfahrzeug mit elektrischer Energie wahlweise aus einem Energieversorgungsnetz oder aus einer Motor-Generator-Kombination. Dabei wird in einem Ausführungsbeispiel beschrieben, bei dem die Motor-Generator-Kombination elektrische Energie an Eingänge eines Gleichrichters einspeist, der mit einem Gleichspannungszwischenkreis verbunden ist. In einem weiteren Ausführungsbeispiel wird beschrieben, dass die Motor-Generator-Kombination Energie über einen Ausgang eines Wechselrichters einspeist, der zur Versorgung von Hilfsbetrieben vorgesehen ist.

WO 2013/114546 A1 zeigt eine gattungsgemäße Schaltungsanordnung.

Die bekannte Lösung weist den Nachteil auf, dass aufgrund der Art der Einspeiseschaltung zusätzliche elektrische Verluste auftreten und Hilfsbetriebe nicht mehr energieoptimiert betrieben werden können. Somit gelangt weniger Energie über die Wechselrichter in den Gleichspannungskreis zur Versorgung der Traktionsantriebe. Zudem besteht die Gefahr, dass beim Einschalten der Hilfsbetriebe hohe Anlaufströme erzeugt werden, die eine elektrische Belastung für den Generator bewirken. Dies kann bis zum Abwürgen dieses Motors führen. Zudem weisen Sekundärwicklungen von Transformatoren für Hilfsbetriebe üblicherweise Filterkondensatoren auf. Die Filterkondensatoren belasten die Motor-Generator-Einheit zusätzlich mit einer nicht zu vernachlässigenden kapazitiven Blindleistung und reduzieren somit die maximal entnehmbare Wirkleistung am Generator der Motor-Generator-Kombination.

Es besteht der Wunsch, den Einsatz von Fahrzeugen, insbesondere Schienenfahrzeugen auch auf nichtelektrifizierten Strecken wie z.B. Abstellstrecken, Containerbahnhöfen oder Rangierbahnhöfen zu erweitern, ohne dass hierzu eine dieselbetriebene Rangierlokomotive bereitgestellt oder mitgeführt werden muss. Da der Einbauraum auf den Fahrzeugen hoch ausgenutzt wird, ist nur wenig Volumen für einen zusätzlichen Motor mit Generator vorhanden. Damit kann nur ein geringer Teil der auf dem Fahrzeug elektrisch vorhandenen Traktionsleistung genutzt werden.

Die Aufgabe der Erfindung besteht darin, eine Schaltungsanordnung für die Integration einer netzunabhängigen Energieversorgung bereitzustellen, die auf bestehende Fahrzeuge leicht und universell nachgerüstet werden kann.

Die Aufgabe der Erfindung wird durch die Schaltungsanordnung gemäß Anspruch 1 gelöst.

Weitere vorteilhafte Ausführungsformen der Erfindung sind in den abhängigen Ansprüchen angegeben.

Ein Vorteil der beschriebenen Schaltungsanordnung besteht darin, dass die von der netzunabhängigen Energieversorgung bereitgestellte Spannung nicht in Form einer Wechselspannung, sondern in Form einer Gleichspannung in die Schaltungsanordnung eingespeist wird. Dies wird dadurch erreicht, dass die Gleichspannung der netzunabhängigen Energieversorgung in den Zwischenkreis der Schaltungsanordnung eingespeist wird.

Auf diese Weise ist die neu vorgeschlagene Schaltungsanordnung universell für reine Wechselspannungsfahrzeuge und reine Gleichspannungsfahrzeuge einsetzbar. Zudem kann die neu vorgeschlagene Schaltungsanordnung auch für Mehrsystemfahrzeuge eingesetzt werden, ohne dass dazu existierende Stromrichter mechanisch angepasst werden müssten. Dabei können beispielsweise existierende Starkstromanschlüsse am Stromrichter ausgenutzt werden.

Zudem weist die neu vorgeschlagene Schaltungsanordnung den Vorteil auf, dass hohe Kurzschlussströme an der netzunabhängigen Energieversorgung bei Kurzschlüssen im Stromrichter durch eine geschickte Wahl des Einspeisepunktes vermieden werden und vorhandene Bauelemente der Schaltungsanordnung genutzt werden, die im Betrieb mit der netzunabhängigen Energieversorgung für die Traktion nicht benötigt werden.

Diese Vorteile werden dadurch erreicht, dass eine erste Anschlussleitung des zweiten Anschlusses, der für die netzunabhängige Energieversorgung vorgesehen ist, über ein Entkopplungsmittel mit der ersten Leitung oder der zweiten Leitung des Zwischenkreises verbunden ist und eine zweite Anschlussleitung des zweiten Anschlusses mit der zweiten Leitung bzw. mit der ersten Leitung des Zwischenkreises verbunden ist. Auf diese Weise wird eine Einspeisung einer Wechselspannung der netzunabhängigen Energieversorgung direkt in den Zwischenkreis erreicht.

Zudem ist ein Entkopplungsmittel vorgesehen, über das die erste Anschlussleitung mit der ersten bzw. der zweiten Leitung des Zwischenkreises oder die zweite Anschlussleitung mit der zweiten bzw. der ersten Leitung des Zwischenkreises verbunden ist. Dadurch wird eine Entkopplung der netzunabhängigen Energieversorgung von der Schaltungsanordnung erreicht. Dabei werden möglichst viele Komponenten der Schaltung funktionell auch für den Betrieb über die netzunabhängige Energieversorgung genutzt. Es werden möglichst geringe Hardwareanpassungen der Schaltungen benötigt und die prinzipielle Funktionalität der Traktionsausrüstung wird weiterhin beibehalten.

Erfindungsgemäß ist die erste oder die zweite Anschlussleitung mit einer Verbindungsleitung des Stromrichters verbunden, wobei die Verbindungsleitung die erste Leitung des Zwischenkreises mit der zweiten Leitung des Zwischenkreises verbindet, wobei die Verbindungsleitung eine Serienschaltung von zwei Drosselspulen und einen in Serie zu der Serienschaltung der zwei Drosselspulen geschalteten Kondensator aufweist und wobei die erste Anschlussleitung zwischen den zwei Drosselspulen an die Verbindungsleitung angeschlossen ist. Auf diese Weise wird eine sichere Entkopplung der netzunabhängigen Energieversorgung ermöglicht. Zudem ist die beschriebene Anordnung mit den zwei Drosselspulen und dem Kondensator bereits in vielen Stromrichtern vorgesehen. Somit kann eine bestehende Schaltungsanordnung einfach und zuverlässig an eine Energieversorgung angeschlossen werden.

In einer Ausführungsform ist das Entkopplungsmittel als wenigstens eine oder vorzugsweise zwei in Serie geschaltete Drosselspulen ausgebildet. Die Verwendung einer Drosselspule als Entkopplungsmittel ist einfach und kostengünstig auszuführen. Zudem weisen eine Vielzahl der im Betrieb befindlichen Schaltungsanordnungen bereits entsprechende Drosselspulen bzw. Drosselspulenanordnungen auf, die für eine Einkopplung der netzunabhängigen Energieversorgung verwendet werden können.

Wäre die netzunabhängige Energieversorgung direkt mit dem Zwischenkreis verbunden, könnte die Gefahr bestehen, dass ein möglicher Strompfad für einen Rückschwingstrom beispielsweise beim Entladen der Kondensatoren des Zwischenkreises in einem Fehlerfall unterbunden wird. Dies kann dadurch vermieden werden, dass die netzunabhängige Energieversorgung vom Zwischenkreis entkoppelt ist.

In einer weiteren Ausführungsform ist die Serienschaltung der zwei Drosselspulen über einen Schalter mit der ersten oder der zweiten Leitung des Zwischenkreises verbunden, wobei zwischen den zwei Drosselspulen eine weitere Verbindungsleitung über einen weiteren Schalter mit der ersten oder der zweiten Leitung verbunden ist. Auf diese Weise kann einfach zwischen der netzabhängigen Energieversorgung und der netzunabhängigen Energieversorgung umgeschaltet werden.

In einer weiteren Ausführungsform ist die erste Anschlussleitung an die erste Leitung oder die zweite Leitung des Zwischenkreises und die zweite Anschlussleitung bzw. die erste Anschlussleitung an einen Eingang eines Wechselrichters angeschlossen. Auf diese Weise wird ein einfacher elektrischer Anschluss der netzunabhängigen Energieversorgung an die Schaltungsanordnung ermöglicht. Abhängig von der gewählten Ausführungsform ist der Wechselrichter beispielsweise in Form eines Vierquadrantenstellers ausgebildet. Die Verwendung des Vierquadrantenstellers hat den Vorteil, dass bereits Dioden zum Entkoppeln der netzunabhängigen Energieversorgung von dem Zwischenkreis des Stromrichters vorgesehen sind.

In einer weiteren Ausführungsform ist ein zweiter Wechselrichter parallel zu den Wechselrichtern angeordnet, wobei beide Wechselrichter den Zwischenkreis mit Strom versorgen.

In einer weiteren Ausführungsform weist die erste oder die zweite Leitung des Zwischenkreises zwischen der ersten oder der zweiten Anschlussleitung und dem Wechselrichter eine Drosselspule auf. Damit ist eine einfache und sichere Entkopplung gegeben.

In einer weiteren Ausführungsform ist in der ersten Leitung zwischen der Drosselspule und dem Wechselrichter eine zweite Drosselspule angeordnet, wobei zwischen den Drosselspulen eine weitere Verbindungsleitung an die erste oder zweite Leitung angeschlossen ist, wobei die weitere Verbindungsleitung einen Kondensator aufweist, und wobei die Verbindungsleitung mit der zweiten bzw. der ersten Leitung verbunden ist. Auf diese Weise ist eine sichere Entkopplung der netzunabhängigen Energieversorgung möglich und zudem ist ein einfacher Anschluss an den Stromrichter gegeben.

In einer weiteren Ausführungsform weist der Zwischenkreis wenigstens einen Kondensator auf, der zwischen der ersten und der zweiten Leitung angeschlossen sind, wobei parallel zu den Kondensatoren ein Schutzbaustein vorgesehen ist, der bei einem Fehlerfall, beispielsweise einer Überspannung oder einem Bausteinschaden, den Kondensator durch einen gezielten Kurzschluss zwischen der ersten und der zweiten Leitung schnell entladen kann.

Ein Vorteil der beschriebenen Anordnung besteht darin, dass bestehende elektrische Elemente wie z. B. Drosselspulen genutzt werden, die bereits im Stromrichter vorhanden sind, um einen sicheren elektrischen Anschluss der netzunabhängigen Energieversorgung zu ermöglichen. Mithilfe der beschriebenen Ausführungsformen ist eine Einspeisung der netzunabhängigen Energieversorgung in die Stromrichter möglich, ohne dass dazu wesentliche Änderungen oder keine Änderungen am Stromrichter erforderlich sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden:
- FIG 1: eine erste Ausführungsform einer Schaltungsanordnung mit einer Wechselstromversorgung eines Fahrzeuges über das Energienetz,
- FIG 2: eine weitere Ausführungsform einer Schaltungsanordnung für eine Gleichstromversorgung eines Fahrzeuges über das Energienetz,
- FIG 3: eine schematische Darstellung eines Vierquadrantenstellers,
- FIG 4: eine weitere Ausführungsform einer Schaltungsanordnung mit einer Wechselstromversorgung eines Fahrzeuges über das Energienetz, und
- FIG 5: eine weitere Ausführungsform einer Schaltungsanordnung für eine Gleichstromversorgung eines Fahrzeuges über das Energienetz.

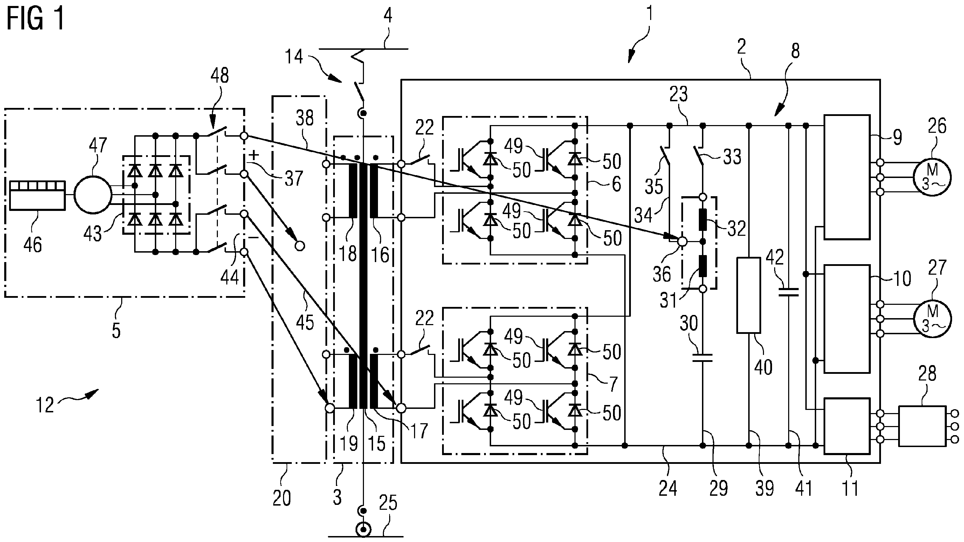

FIG 1 zeigt in einer schematischen Anordnung eine Schaltungsanordnung 1 eines Fahrzeugs 12, das wahlweise mit Energie aus einem Netz oder mit Energie aus einer netzunabhängigen Energieversorgung 5 versorgt werden kann. Das Fahrzeug 12 kann beispielsweise in Form eines Busses oder eines Schienenfahrzeugs, insbesondere in form einer Lokomotive ausgebildet sein. Das Netz 13 weist eine Netzleitung 4 auf, die in dem dargestellten Ausführungsbeispiel Energie in Form einer Wechselspannung bereitstellt. Die Wechselspannung kann beispielsweise 50 Hz und 25 kV oder 16,7 Hz und 15 kV aufweisen. Die Netzleitung 4 versorgt über einen Netzabnehmer 14 einen Eingang einer Primärwicklung 15 eines Transformators 3 mit Strom. Die Primärwicklung 15 ist mit einem Ausgang mit einer Masseleitung 25 verbunden. Der Transformator 3 weist neben der Primärwicklung 15 mehrere Sekundärwicklungen 16,17,18,19 auf. In dem dargestellten Ausführungsbeispiel sind zwei Stromrichter 2, 20 vorgesehen, wobei der zweite Stromrichter 20 gemäß dem ersten Stromrichter 2 ausgebildet ist und deshalb im Detail nicht mehr dargestellt ist.

Der Stromrichter 2 weist zwei parallel geschaltete Gleichrichter 6, 7 auf, die über entsprechende Leitungen 21 mit der ersten bzw. der zweiten Sekundärwicklung verbunden sind. Zudem sind jeweils Schalter 22, 23 vorgesehen, um den ersten bzw. den zweiten Gleichrichter von dem Transformator 3 zu trennen. Die dargestellten Gleichrichter 6, 7 sind beispielsweise als Vierquadrantensteller ausgebildet. Abhängig von der gewählten Ausführungsform können auch andere Formen von Gleichrichtern vorgesehen sein. Die Funktion der Gleichrichter 6, 7 besteht darin, die über die Sekundärwicklungen 16, 17 bereitgestellte Wechselspannung in eine Gleichspannung umzuwandeln und diese einem Zwischenkreis 8 zu übergeben. Dazu sind der erste und der zweite Gleichrichter 6, 7 mit einer ersten Leitung 23 des Zwischenkreises 8 für die Versorgung mit einer positiven Spannung und mit einer zweiten Leitung 24 des Zwischenkreises 8 für die Versorgung mit einer negativen Spannung verbunden. Die Gleichrichter 6, 7 werden entsprechend angesteuert, um eine positive Gleichspannung auf die erste Leitung 23 und um eine negative Gleichspannung an die zweite Leitung 24 auszugeben.

Der Zwischenkreis 8 versorgt über die erste und zweite Leitung 23, 24 in dem dargestellten Ausführungsbeispiel drei Wechselrichter 9, 10, 11 mit einer positiven und einer negativen Gleichspannung. In dem dargestellten Ausführungsbeispiel sind der erste Wechselrichter und der zweite Wechselrichter 10 dazu vorgesehen, um Antriebe 26, 27, so genannte Traktionsantriebe, mit einem Drehstrom zu versorgen. Der dritte Wechselrichter 11 ist vorgesehen, um über einen weiteren Transformator 28 weitere Verbraucher, die nicht dem Antrieb dienen, mit Strom zu versorgen. Der Zwischenkreis 8 weist eine erste Verbindungsleitung 29 auf, die die erste Leitung 23 mit der zweiten Leitung 24 verbindet. Die erste Verbindungsleitung 29 weist wenigstens einen ersten Kondensator 30 auf, der mit einer Serienschaltung aus einer ersten und einer zweiten Drosselspule 31, 32 in Serie geschalten ist. Der erste Kondensator 30 ist mit der zweiten Leitung 24 verbunden. Die erste Drosselspule 31 ist mit dem ersten Kondensator 30 verbunden. Die zweite Drosselspule 32 ist auf der einen Seite mit der ersten Drosselspule 31 und auf der anderen Seite über einen ersten Schalter 33 mit der ersten Leitung 23 verbunden. Zudem ist in dem dargestellten Ausführungsbeispiel zwischen den zwei Drosselspulen 31, 32 eine zweite Verbindungsleitung 34 mit der ersten Verbindungsleitung 29 verbunden, die zur ersten Leitung 23 über einen zweiten Schalter 34 geführt ist. Zudem ist zwischen der ersten und der zweiten Drosselspule 31, 32 ein Anschlusspunkt 36 vorgesehen, mit dem ein positiver Ausgang 37 einer netzunabhängigen Energieversorgung 5 über eine dritte Verbindungsleitung 38 angeschlossen ist. Die erste und die zweite Drosselspule 31,32 stellen Saugkreisdrosseln dar.

Parallel zur ersten Verbindungsleitung 29 ist eine vierte Verbindungsleitung 39 vorgesehen, in der ein Schutzbaustein 40 vorgesehen ist, wobei die vierte Verbindungsleitung 39 die erste und die zweite Leitung 23, 24 über den Schutzbaustein 40 miteinander verbindet. Zudem ist eine fünfte Verbindungsleitung 41 vorgesehen, die die erste und die zweite Leitung 23, 24 verbindet, wobei in der fünften Verbindungsleitung 41 mindestens ein weiterer Kondensator 42 vorgesehen ist. Der Schutzbaustein 40 dient dazu, um in einem Fehlerfall, z. B. durch eine Überspannung oder einem Schaden im Stromrichter bzw. im Zwischenkreis, den weiteren Kondensator 42 durch einen gezielten Kurzschluss rasch zu entladen, um so die Energie aus den Stromrichtern gezielt abzuziehen.

Durch parasitäre Elemente im Zwischenkreis 8 kann es beim schlagartigen Entladen des weiteren Kondensators 42 über die Schutzschaltung 40 jedoch zu einem Überschwinger der Spannung im Zwischenkreis in eine negative Richtung kommen. Wäre nun die netzunabhängige Energieversorgung 5 direkt mit dem Zwischenkreis 8 verbunden, entstünde ein möglicher Strompfad über die netzunabhängige Energieversorgung 5 für diesen Rückschwingstrom, insbesondere bei der Verwendung einer Diodenbrücke als dritten Gleichrichter 43 für die netzunabhängige Energieversorgung 5. Da der Rückschwingstrom um ein Vielfaches größer ist als der Betriebsstrom im dritten Gleichrichter 43 der netzunabhängigen Energieversorgung 5, müssten hierfür wesentlich stärker dimensionierte Gleichrichterdioden vorgesehen sein, als dies für einen normalen Betrieb erforderlich ist. Dies kann vermieden werden, indem die netzunabhängige Energieversorgung 5 vom Zwischenkreis 8 entkoppelt ist. Dies wird dadurch erreicht, dass der positive Ausgang 37 oder ein negativer Ausgang 44 der netzunabhängigen Energieversorgung 5 nicht direkt mit der ersten bzw. zweiten Leitung 23,24 verbunden sind, sondern dass eine Induktivität beispielsweise in Form einer Drossel dazwischen geschaltet ist. In der Ausführungsform der FIG 1 ist die zweite Drosselspule 32 zwischen der ersten Leitung 23 und dem positiven Ausgang 37 geschaltet. Ein negativer Ausgang 44 der netzunabhängigen Energieversorgung 5 ist über eine sechste Verbindungsleitung 45 mit einem Eingang des zweiten Gleichrichters 7 verbunden. Zur Entkopplung könnte auch eine Drosselspule zwischen dem negativen Ausgang 44 und dem Zwischenkreis angeordnet sein. Abhängig von der gewählten Ausführungsform kann die sechste Verbindungsleitung 45 auch mit einem anderen Eingang des zweiten Wechselrichters 7 oder mit einem anderen Eingang des ersten Wechselrichters 6 verbunden sein.

Die netzunabhängige Energieversorgung 5 ist im dargestellten Ausführungsbeispiel als Brennkraftmaschine 46 ausgebildet, die über einen Generator 47 und über den dritten Gleichrichter 43 über die Ausgänge 37, 44 eine Gleichspannung an den Stromrichter 2 und den zweiten Stromrichter 20 abgibt. Der dritte Gleichrichter 43 ist beispielsweise in Form einer Gleichrichterbrücke ausgebildet und über einen Trennschalter 48 mit den Ausgängen 37,44 verbunden. Der Trennschalter 48 ist vorgesehen, um den positiven und negativen Ausgang der Gleichrichterbrücke mit dem positiven Ausgang 37 bzw. dem negativen Ausgang 44 zu verbinden bzw. die Verbindung zu unterbrechen. Die Brennkraftmaschine 46 kann beispielsweise in Form einer Dieselkraftmaschine ausgebildet sein.

Wird die netzunabhängige Energieversorgung 5 mit mehreren Zwischenkreisen oder Stromrichtern verbunden, so werden hierdurch auch unterschiedliche Zwischenkreise, die im Netzbetrieb über die Netzleitung 4, d.h. z.B. im Oberleitungsbetrieb voneinander vollkommen unabhängig sind, untereinander verbunden. Diese Verschaltung führt aufgrund von parasitären Induktivitäten der Zuleitungen zwischen der netzunabhängigen Energieversorgung 5 und dem Stromrichter 2 und dem zweiten Stromrichter 20 zu einem Schwingkreis, dessen Resonanzeigenschaften zu einer erheblichen Zusatzbelastung der Zwischenkreiskondensatoren führen können. Bei der Verbindung der netzunabhängigen Energieversorgung mit mehreren Zwischenkreisen entsteht zudem ein weiterer Effekt: Bei Kurzschluss in einem Zwischenkreis, z. B. ungewollt durch einen Bauteilfehler oder gezielt durch eine Kurzschlusszündung, würde sich hierbei nicht nur der betroffene Zwischenkreis entladen, sondern es käme zur Entladung der Energien aller angeschlossenen Zwischenkreise in den Kurzschlussort. Hierbei entstünden sehr hohe Kurzschlussströme, für welche weder die netzunabhängige Energieversorgung 5 noch der oder die Stromrichter 2,20 dimensioniert sind.

Aus den oben genannten Gründen sollte der Zwischenkreis 8 des Stromrichters 2 nicht direkt mit beiden Ausgängen der netzunabhängigen Energieversorgung 5 verbunden sein, sondern sollte voneinander entkoppelt werden. Als Entkoppelelemente können prinzipiell Drosselspulen verwendet werden, deren Induktivität so groß ist, dass die Resonanzfrequenz mit dem weiteren Kondensator 32 des Zwischenkreises 8 so niedrig ist, dass sie von einer Steuerung messtechnisch erfasst werden kann und damit auch beeinflusst werden kann.

Ein Vorteil der beschriebenen Vorrichtung besteht darin, dass Drosselspulen genutzt werden, die auf den Fahrzeugen für den Betrieb über die Netzleitung 4 bereits vorhanden sind, jedoch für den Betrieb mit einer netzunabhängigen Energieversorgung 5 prinzipiell nicht benötigt werden. Somit kann mit der vorgeschlagenen elektrischen Verbindung zwischen der netzunabhängigen Energieversorgung 5 und dem Stromrichter 2 eine Anordnung bereitgestellt werden, bei mithilfe einer Drosselspule z.B. der zweite Drosselspule 32 Strom in den Zwischenkreis eingespeist werden kann, ohne dass dazu Änderungen am Stromrichter 2 bzw. an der zweiten Drosselspule 32 erforderlich sind.

In der Ausführungsform der FIG 1 wird dazu die zweite Drosselspule 32 verwendet, die eine Saugkreisdrossel darstellt. Die zweite Drosselspule 32 ist üblicherweise außerhalb des Gehäuses des Stromrichters 2,20 angeordnet, sodass deren Anschlusspunkte für die elektrische Verbindung mit der netzunabhängigen Energieversorgung 5 zugängig sind. Neben einem passenden Anschlusspunkt 36 soll darüber hinaus noch sichergestellt werden, dass auch die vorhandenen Schütze bzw. Trennschalter auf dem Fahrzeug eine passende Konfiguration aufweisen, die auf die Spannungsfreiheit aller Oberspannungskomponenten im Betrieb mit der netzunabhängigen Energieversorgung 5 sicherstellen. Dazu wird beim Übergang in den netzunabhängigen Betrieb mit Hilfsdiesel bei dem Betrieb über die Netzleitung 4 der erste Schalter 33 geschlossen und der zweite Schalter 35 geöffnet. Zudem werden die Schalter 22 der Sekundärwicklungen 16, 17 geöffnet.

Die Einspeisung der negativen Spannung der netzunabhängigen Energieversorgung 5 erfolgt über die Gleichrichter 6, 7. Die Gleichrichter 6, 7 sind z.B. als Vierquadrantensteller ausgebildet und bestehen aus aktiv schaltenden Leistungshalbleitern 49. Zudem ist parallel zu jedem Leistungshalbleiter 49 eine Freilaufdiode 50 parallel geschaltet. Auch hier besteht wieder eine räumliche Trennung von Stromrichter 2 und Transformator 3, sodass auch diese Verbindungspunkte zugängig für einen elektrischen Anschluss der sechsten Verbindungsleitung 45 des negativen Ausgangs der netzunabhängigen Energieversorgung 5 sind. Anstatt nun direkt eine Verbindung in die zweite Leitung 24, das heißt die negative Spannung des Zwischenkreises 8 zu schaffen, wird ein Anschluss über den negativen Eingang des Vierquadrantenstellers ausgeführt. Somit fließt in dieser Ausführungsform bei einem Kurzschluss durch den Schutzbaustein 40 ein Rückstrom über die entsprechende Freilaufdiode 50 des Vierquadrantenstellers.

Diese Nutzung der Freilaufdiode hat einen weiteren Vorteil: Eine Begrenzung der Entladeströme bei Kurzschlüssen erfordert bei Verwendung ausschließlich von Drosseln mit großen Induktivitäten. Diese Randbedingung ist bei einer Versorgung mit Wechselspannung über die Netzleitung 4 nicht gegeben, da die Induktivität in der Regel in einem Bereich zwischen 0,25 mH und 3 mH liegt, sodass die Querströme hier deutlich größer ausfallen würden. Durch die Nutzung der Freilaufdiode des Vierquadrantenstellers werden die einzelnen Teilzwischenkreise bei Entladevorgängen wie dem Kurzschluss über den Schutzbaustein 40 voneinander entkoppelt, sodass keine Querströme mehr entstehen. Diese Eigenschaft könnte auch erreicht werden, wenn eine der Freilaufdioden des Vierquadrantenstellers bei der Einspeisung der Plusspannung verwendet wird. Wichtig ist dabei nur, dass in jedem Teilzwischenkreis, d.h. zwischen dem negativen Ausgang 44, dem Zwischenkreis 8 eines Stromrichters 2 und dem positiven Ausgang 37 mindestens eine Diode in der Einspeisung der positiven oder der negativen Spannung der netzunabhängigen Energieversorgung 5 vorgesehen ist.

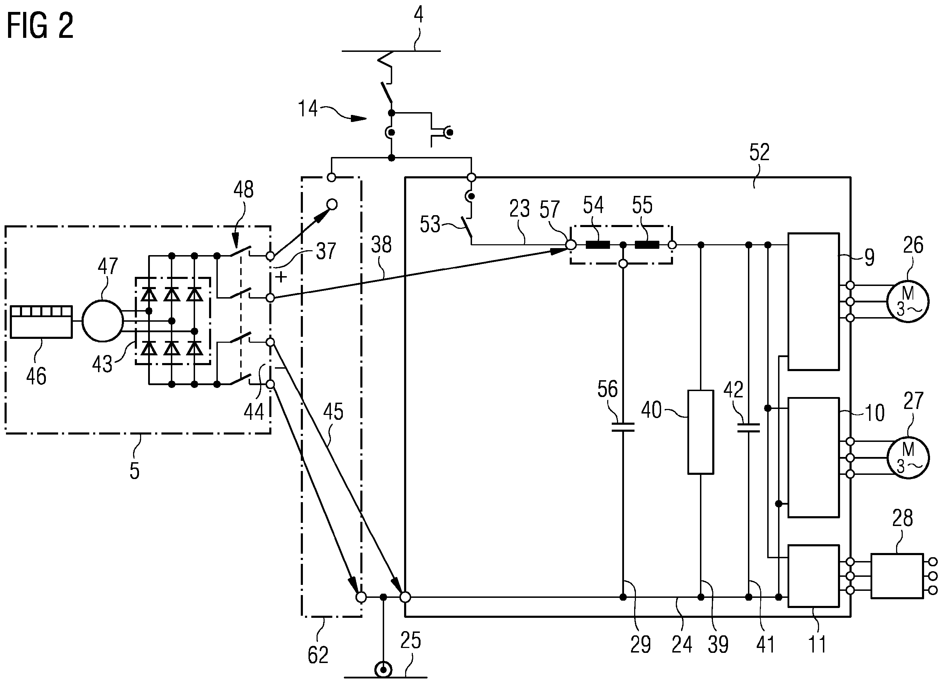

FIG 2 zeigt eine weitere Ausführungsform eines Fahrzeugs 12, das über die Netzleitung 4 mit einer Gleichspannung versorgt wird. Deshalb entfällt im Vergleich zur Ausführungsform der FIG 1 der Transformator 3. In diesem Fall ist der Netzabnehmer 14 über einen dritten Schalter 53 mit der ersten Leitung 23 des Zwischenkreises 8 des zweiten Stromrichters 52 verbunden. Der Zwischenkreis 8 versorgt über die erste und zweite Leitung 23, 24 in dem dargestellten Ausführungsbeispiel drei Wechselrichter 9, 10, 11 mit einer positiven und einer negativen Gleichspannung. In dem dargestellten Ausführungsbeispiel sind der erste Wechselrichter und der zweite Wechselrichter 10 dazu vorgesehen, um Antriebe 26, 27, sogenannte Traktionsantriebe, mit einem Drehstrom zu versorgen. Der dritte Wechselrichter 11 ist vorgesehen, um über einen weiteren Transformator 28 weitere Verbraucher, die nicht dem Antrieb dienen, mit Strom zu versorgen.

In der ersten Leitung 23 des Zwischenkreises 8 ist eine Serienschaltung einer dritten und vierten Drosselspule 54, 55 vorgesehen. Die dritte und vierte Drosselspule 54, 55 stellen Netzfilterdrosseln dar. Die erste Leitung 23 ist mit positiven Eingängen des ersten, zweiten und dritten Wechselrichters 9, 10, 11 verbunden. Zudem ist zwischen der dritten und vierten Drosselspule und den Wechselrichtern 9, 10, 11 eine vierte Verbindungsleitung 39 mit einem Schutzbaustein 40 und eine fünfte Verbindungsleitung 41 mit wenigstens einem weiteren Kondensator 42 vorgesehen, die mit der zweiten Leitung 24 verbunden sind. Weiterhin ist eine erste Verbindungsleitung 29 vorgesehen, die einen Netzfilterkondensator 56 aufweist. Die erste Verbindungsleitung 29 ist zwischen der dritten und vierten Drosselspule 54, 55 mit der ersten Leitung 23 verbunden.

Zwischen dem dritten Schalter 53 und der Serienschaltung der dritten und vierten Drosselspule 54, 55 ist ein zweiter Anschlusspunkt 57 vorgesehen, an dem die dritte Verbindungsleitung 38 des positiven Ausgangs 37 der netzunabhängigen Energieversorgung angeschlossen ist. Die netzunabhängige Energieversorgung 5 ist gemäß der Ausbildungsform 1 ausgebildet und wird hier nicht noch einmal genauer erläutert.

Ein negativer Ausgang 44 der netzunabhängigen Energieversorgung 5 ist direkt an die zweite Leitung 24 des Zwischenkreises 8 angeschlossen. Die zweite Leitung 24 ist mit einer Masseleitung 25 verbunden. Zudem kann gemäß der dargestellten Ausführungsform ein weiterer zweiter Stromrichter 62 vorgesehen sein, der wie der zweite Stromrichter 52 aufgebaut ist und in der gleichen Weise elektrisch mit der netzunabhängigen Energieversorgung 5 verbunden ist.

Bei der Versorgung des Fahrzeugs 12 über die netzunabhängige Energieversorgung 5 wird der dritte Schalter 53 geöffnet. Dadurch wird das Fahrzeug von dem Netz getrennt. Bei dem Betrieb des Fahrzeugs 12 über die Netzleitung 4 werden der dritte Schalter 53 geschlossen und der Trennschalter 48 geöffnet. Die dritte und vierte Drosselspule 54, 55 weisen in der Regel aufgrund von Netzanforderungen meistens eine Induktivität zwischen 5mH und 35 mH auf. Dadurch ist eine ausreichende Induktivität vorgesehen, die die Ausbildung von Querströmen bei einem Kurzschluss für einen Rückstrom unterbinden.

Mithilfe der beschriebenen Anordnungen ist es möglich, unterschiedliche Stromrichtungen der Typen von verschiedenen Fahrzeugen auf einfache Weise elektrisch leitend mit einer netzunabhängigen Energieversorgung 5 zu verbinden, ohne dass wesentliche oder keine hardwaremäßige Anpassung in den Stromrichtern oder bei der Hilfsbetriebserzeugung erforderlich sind. Zudem kann die Funktion sämtlicher Hilfsbetriebeversorgungen im Betrieb unter Netzspannung beibehalten werden. Weiterhin werden vorzugsweise Freilaufdioden der Gleichrichter bei einer Versorgung von Fahrzeugen mit Wechselspannung zur Vermeidung der Verschleppung von Kurzschlussströmen in andere Teilzwischenkreise verwendet. Zudem können existierende Drosseln zur Begrenzung von Kurzschlussströmen aus anderen Teilzwischenkreisen genutzt werden. Weiterhin können existierende Drosseln zur Begrenzung von Rückstromvorgängen an einer Gleichrichterbrücke der netzunabhängigen Energieversorgung verwendet werden.

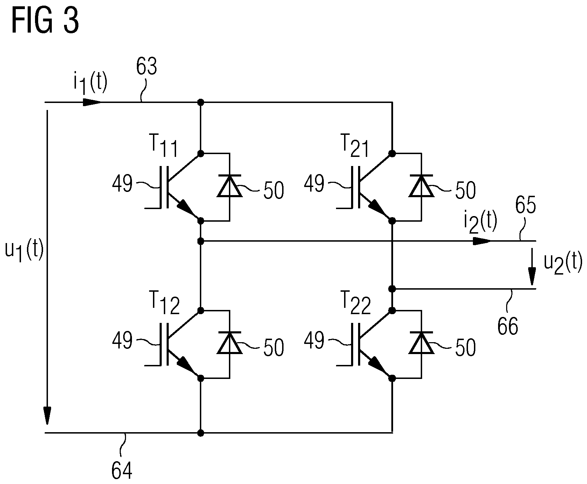

FIG 3 zeigt in einer schematischen Darstellung eine Ausführungsform eines Gleichrichters 6 in Form eines Vierquadrantenstellers. Der Gleichrichter 6 weist Eingänge 63, 64 auf, die mit Ausgängen der Sekundärspulen 16, 17 der Ausführungsform der FIG 1 verbunden sind. Zudem weist der Gleichrichter 6 Ausgänge 65, 66 auf, die mit der ersten bzw. zweiten Leitung 23, 24 verbunden sind. Durch die entsprechende Ansteuerung der Leistungshalbleiter 49 wird eine gewünschte Gleichrichtung, d. h. die Erzeugung einer Gleichspannung auf der ersten und zweiten Leitung 23, 24 erreicht. Die Leistungshalbleiter 49 sind z.B. als IGBT Transistoren ausgebildet.

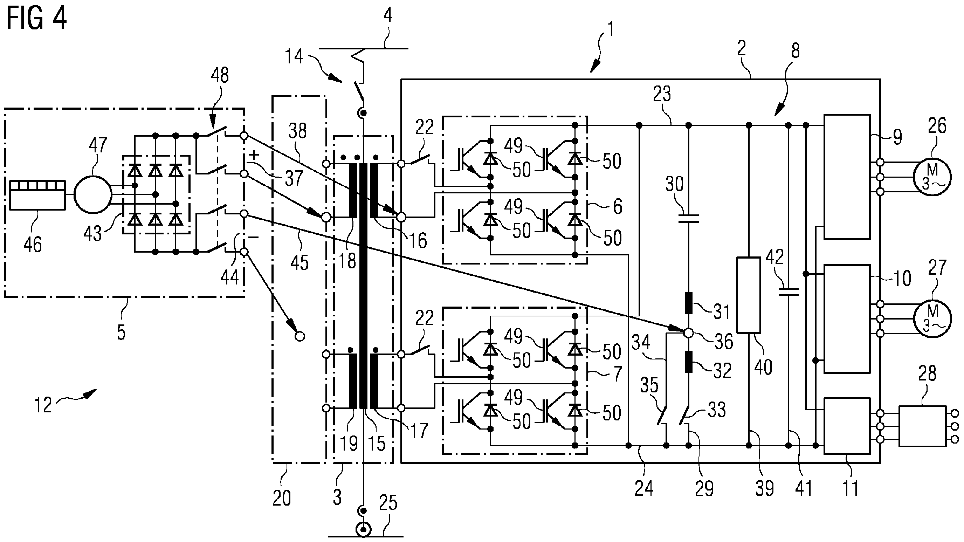

FIG 4 zeigt eine weitere Ausführungsform einer Schaltungsanordnung, die im wesentlichen gemäß der Ausführungsform der FIG 1 aufgebaut ist, wobei jedoch im Gegensatz zu FIG 1 der positive Ausgang 37 der netzunabhängigen Energieversorgung 5 über die dritte Verbindungsleitung 38 mit einem Eingang des ersten Gleichrichters 6 verbunden ist. Abhängig von der gewählten Ausführungsform könnte der positive Ausgang 37 auch mit einem Eingang des zweiten Gleichrichters 7 verbunden sein. Zudem ist die Anordnung der ersten Verbindungsleitung 29 geändert, wobei der erste Kondensator 30 mit der ersten Leitung 23 und die Serienschaltung der zwei Drosselspulen 31,32 über den ersten Schalter 33 mit der zweiten Leitung 24 verbunden ist. Zudem ist der Anschlusspunkt 36, der zwischen der ersten und der zweiten Drosselspule 31, 32 angeordnet ist, über die zweite Verbindungsleitung 34 und den zweiten Schalter 35 mit der zweiten Leitung 24 verbunden. Weiterhin ist der negative Ausgang 44 der netzunabhängigen Energieversorgung 5 über die sechste Verbindungsleitung 45 mit dem Anschlusspunkt 36 verbunden. Im netzunabhängigen Betrieb ist der erste Schalter 33 geschlossen und der zweite Schalter 35 geöffnet.

Mit dieser Ausführungsform wird die gleiche Funktion und werden die gleichen Vorteile wie mit der Ausführungsform der FIG 1 erreicht.

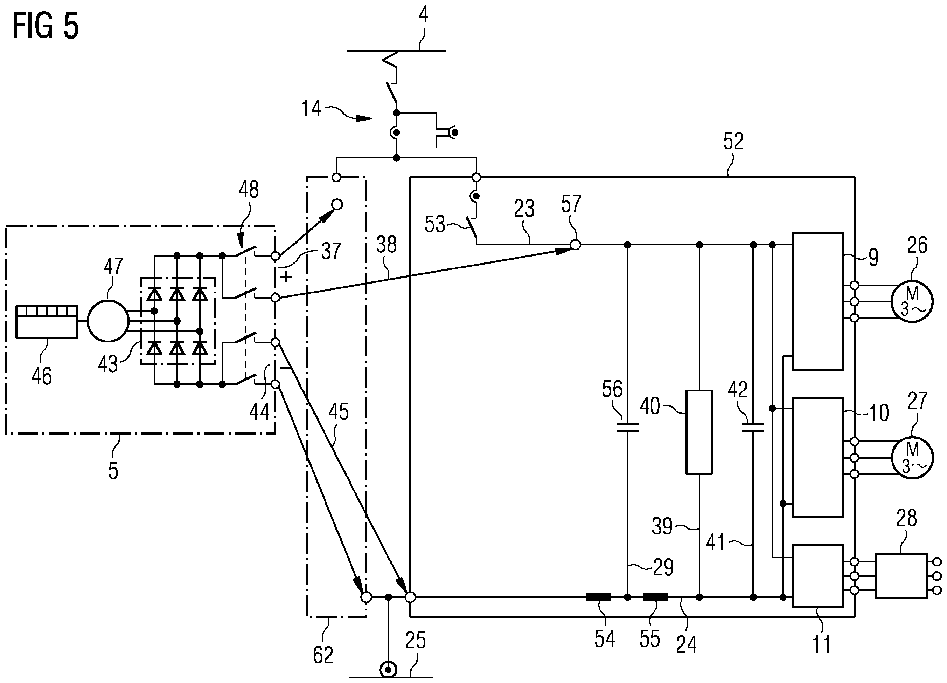

FIG 5 zeigt eine weitere Ausführungsform einer Schaltungsanordnung, die im Wesentlichen der Schaltungsanordnung der FIG 2 entspricht. Im Gegensatz zur Ausführungsform der FIG 2 sind die dritte und vierte Spule 54, 55 in der zweiten Leitung 24 angeordnet. Mit dieser Ausführungsform wird die gleiche Funktion und werden die gleichen Vorteile wie mit der Ausführungsform der FIG 2 erreicht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Schaltungsanordnung (1) zum Versorgen eines Antriebes (26, 27) eines Fahrzeuges (12), insbesondere zur Versorgung eines Schienenfahrzeuges mit elektrischer Energie, wobei die Schaltungsanordnung einen Stromrichter (2, 20, 52, 62) aufweist, wobei der Stromrichter (2, 20, 52, 62) erste Anschlüsse für ein Energieversorgungsnetz (4) und zweite Anschlüsse für eine netzunabhängige elektrische Energieversorgungseinheit (5) aufweist, wobei der Stromrichter (2, 20, 52, 62) einen Zwischenkreis (8) und mindestens einen Wechselrichter (9, 10) aufweist, wobei der Wechselrichter (9, 10) an eine erste Leitung (23) des Zwischenkreises (8) zur Versorgung mit positiver Spannung und an eine zweite Leitung (24) des Zwischenkreises (8) zur Versorgung mit negativer Spannung angeschlossen ist, wobei der Wechselrichter (9, 10) ausgebildet ist, um den Antrieb (26, 27) des Fahrzeuges mit einer Wechselspannung zu versorgen, wobei eine erste Anschlussleitung (38, 45) des zweiten Anschlusses über ein Entkopplungsmittel (32, 54) mit der ersten oder der zweiten Leitung (23, 24) des Zwischenkreises (8) verbunden ist, und wobei eine zweite Anschlussleitung des zweiten Anschlusses (38, 45) mit der zweiten bzw. der ersten Leitung (23, 24) des Zwischenkreises (8) verbunden ist, wobei der Stromrichter (2, 20, 52, 62) wenigstens einen Gleichrichter (6, 7) aufweist, wobei der Gleichrichter (6, 7) die ersten Anschlüsse mit der ersten und der zweiten Leitung (23, 24) des Zwischenkreises (8) verbindet, **dadurch gekennzeichnet, dass** die erste Anschlussleitung (38, 45) mit einer ersten Verbindungsleitung (29) verbunden ist, wobei die erste Verbindungsleitung (29) die erste Leitung (23) des Zwischenkreises (8) mit der zweiten Leitung (24) des Zwischenkreises (8) verbindet, wobei die erste Verbindungsleitung (29) eine Serienschaltung von zwei Drosselspulen (31, 32) und einen zu der Serienschaltung der zwei Drosselspulen in Serie geschalteten Kondensator (30) aufweist, und wobei die erste Anschlussleitung (38, 45) zwischen den zwei Drosselspulen (31, 32) an die erste Verbindungsleitung (29) angeschlossen ist.

2. Schaltungsanordnung nach Anspruch 1, wobei das Entkopplungsmittel als Drosselspule (32, 54) ausgebildet ist.

3. Schaltungsanordnung nach Anspruch 1 oder 2, wobei die Serienschaltung der zwei Drosselspulen (31, 32) über einen ersten Schalter (33) mit der ersten Leitung (23) des Zwischenkreises verbunden ist, und wobei zwischen den zwei Drosselspulen (31, 32) eine weitere Verbindungsleitung (34) über einen weiteren Schalter (35) mit der ersten Leitung (23) verbunden ist.

4. Schaltungsanordnung nach Anspruch 1, wobei die zweite Anschlussleitung (18, 45) mit einer ersten Verbindungsleitung (29) verbunden ist, wobei die erste Verbindungsleitung (29) die erste Leitung (23) des Zwischenkreises (8) mit der zweiten Leitung (24) des Zwischenkreises (8) verbindet, wobei die erste Verbindungsleitung (29) eine Serienschaltung von zwei Drosselspulen 31, 32) und einen zu der Serienschaltung der zwei Drosselspulen in Serie geschalteten Kondensator (30) aufweist, und wobei die zweite Anschlussleitung (38, 45) zwischen den zwei Drosselspulen (31, 32) an die erste Verbindungsleitung (29) angeschlossen ist.

5. Schaltungsanordnung nach Anspruch 4, wobei die Serienschaltung der zwei Drosselspulen (31, 32) über einen ersten Schalter (33) mit der zweiten Leitung (24) des Zwischenkreises (8) verbunden ist, und wobei zwischen den zwei Drosselspulen (31, 32) eine weitere Verbindungsleitung (34) über einen weiteren Schalter (35) mit der zweiten Leitung (23) verbunden ist.

6. Schaltungsanordnung nach einem der Ansprüche 1 bis 5, wobei die erste Anschlussleitung (38) oder die zweite Anschlussleitung (45) über eine Diode (50) mit der ersten bzw. der zweiten Leitung (24) des Zwischenkreises (8) verbunden ist.

7. Schaltungsanordnung nach Anspruch 6, wobei die Diode (50) als Diode (50) eines Gleichrichters (6, 7), insbesondere eine Freilaufdiode eines Vierquadrantenstellers ausgebildet ist.

8. Schaltungsanordnung nach einem der vorhergehenden Ansprüche, wobei ein zweiter Gleichrichter (7) parallel zu dem Gleichrichter (6) angeordnet ist, und wobei beide Gleichrichter (6, 7) den Zwischenkreis (8) mit Strom aus dem Netz (4) versorgen.

9. Schaltungsanordnung nach Anspruch 1, wobei die erste oder die zweite Leitung (23, 24) des Zwischenkreises (8) zwischen der ersten Verbindungsleitung (29) und dem Gleichrichter (6, 7) eine Drosselspule (54, 55) aufweist.

10. Schaltungsanordnung nach Anspruch 9, wobei in der ersten Leitung (23) oder in der zweiten Leitung (24) eine zweite Drosselspule (55) angeordnet ist, wobei zwischen den Drosselspulen (54, 55) eine weitere Verbindungsleitung (29) an die erste bzw. an die zweite Leitung angeschlossen ist, wobei die weitere Verbindungsleitung (29) einen Kondensator (56) aufweist, und wobei die weitere Verbindungsleitung (29) mit der zweiten bzw. mit der ersten Leitung (23, 24) verbunden ist.

11. Schaltungsanordnung nach einem der vorhergehenden Ansprüche, wobei eine zweite Verbindungsleitung (41) zwischen der ersten und der zweiten Leitung (23, 24) vorgesehen ist, wobei die zweite Verbindungsleitung (41) einen Kondensator (42) aufweist, wobei eine dritte Verbindungsleitung (39) zwischen der ersten und der zweiten Leitung (23, 24) vorgesehen ist, wobei die dritte Verbindungsleitung (39) einen Schutzbaustein (40) aufweist, wobei der Schutzbaustein (40) ausgebildet ist, um bei Spannungen zwischen der ersten und der zweiten Leitung (23, 24), die unterhalb einer vorgegebenen Grenze liegen, nicht leitend zu sein, und wobei die Schutzschaltung ausgebildet ist, um bei Spannungen, die oberhalb der vorgegebenen Grenze liegen, eine leitende Kurzschlussverbindung zwischen der ersten und zweiten Leitung (23, 24) herzustellen.

## Claims

1. Circuit arrangement (1) for supplying a drive (26, 27) of a vehicle (12), in particular for supplying a rail vehicle with electrical energy, wherein the circuit arrangement has a converter (2, 20, 52, 62), wherein the converter (2, 20, 52, 62) has first terminals for an energy supply grid (4) and second terminals for a grid-independent electrical energy supply unit (5), wherein the converter (2, 20, 52, 62) has an intermediate circuit (8) and at least one inverter (9, 10), wherein the inverter (9, 10) is connected to a first line (23) of the intermediate circuit (8) in order to be supplied with positive voltage and to a second line (24) of the intermediate circuit (8) in order to be supplied with negative voltage, wherein the inverter (9, 10) is designed to supply the drive (26, 27) of the vehicle with an AC voltage, wherein a first connection line (38, 45) of the second terminal is connected to the first or the second line (23, 24) of the intermediate circuit (8) via a decoupling means (32, 54), and wherein a second connection line of the second terminal (38, 45) is connected to the second or the first line (23, 24) of the intermediate circuit (8), wherein the converter (2, 20, 52, 62) has at least one rectifier (6, 7), wherein the rectifier (6, 7) connects the first terminals to the first and the second line (23, 24) of the intermediate circuit (8), **characterized in that** the first connection line (38, 45) is connected to a first connecting line (29), wherein the first connecting line (29) connects the first line (23) of the intermediate circuit (8) to the second line (24) of the intermediate circuit (8), wherein the first connecting line (29) has a series circuit of two chokes (31, 32) and a capacitor (30) connected in series with the series circuit of the two chokes, and wherein the first connection line (38, 45) is connected to the first connecting line (29) between the two chokes (31, 32).

2. Circuit arrangement according to Claim 1, wherein the decoupling means is in the form of a choke (32, 54).

3. Circuit arrangement according to Claim 1 or 2, wherein the series circuit of the two chokes (31, 32) is connected to the first line (23) of the intermediate circuit via a first switch (33), and wherein a further connecting line (34) is connected to the first line (23) between the two chokes (31, 32) via a further switch (35).

4. Circuit arrangement according to Claim 1, wherein the second connection line (18, 45) is connected to a first connecting line (29), wherein the first connecting line (29) connects the first line (23) of the intermediate circuit (8) to the second line (24) of the intermediate circuit (8), wherein the first connecting line (29) has a series circuit of two chokes (31, 32) and a capacitor (30) connected in series with the series circuit of the two chokes, and wherein the second connection line (38, 45) is connected to the first connecting line (29) between the two chokes (31, 32).

5. Circuit arrangement according to Claim 4, wherein the series circuit of the two chokes (31, 32) is connected to the second line (24) of the intermediate circuit (8) via a first switch (33), and wherein a further connecting line (34) is connected to the second line (23) between the two chokes (31, 32) via a further switch (35).

6. Circuit arrangement according to one of Claims 1 to 5, wherein the first connection line (38) or the second connection line (45) is connected to the first or second line (24) of the intermediate circuit (8) via a diode (50).

7. Circuit arrangement according to Claim 6, wherein the diode (50) is in the form of a diode (50) of a rectifier (6, 7), in particular a freewheeling diode of a four-quadrant actuator.

8. Circuit arrangement according to one of the preceding claims, wherein a second rectifier (7) is arranged in parallel with the rectifier (6), and wherein both rectifiers (6, 7) supply the intermediate circuit (8) with power from the grid (4) .

9. Circuit arrangement according to Claim 1, wherein the first or the second line (23, 24) of the intermediate circuit (8) has a choke (54, 55) between the first connecting line (29) and the rectifier (6, 7).

10. Circuit arrangement according to Claim 9, wherein a second choke (55) is arranged in the first line (23) or in the second line (24), wherein a further connecting line (29) is connected to the first or to the second line between the chokes (54, 55), wherein the further connecting line (29) has a capacitor (56), and wherein the further connecting line (29) is connected to the first or to the second line (23, 24).

11. Circuit arrangement according to one of the preceding claims, wherein a second connecting line (41) is provided between the first and the second line (23, 24), wherein the second connecting line (41) has a capacitor (42), wherein a third connecting line (39) is provided between the first and the second line (23, 24), wherein the third connecting line (39) has a protection module (40), wherein the protection module (40) is designed to be non-conductive in the event of voltages between the first and the second line (23, 24) that are below a predefined threshold, and wherein the protective circuit is designed to establish a conductive short-circuit connection between the first and second line (23, 24) in the event of voltages that are above the predefined threshold.

## Revendications

1. Agencement de circuit (1) servant à l'alimentation d'un entraînement (26, 27) d'un véhicule (12), en particulier à l'alimentation d'un véhicule ferroviaire en énergie électrique, dans lequel l'agencement de circuit comprend un convertisseur de courant (2, 20, 52, 62), le convertisseur de courant (2, 20, 52, 62) comprend des premières bornes destinées à un réseau d'alimentation en énergie (4) et des secondes bornes destinées à une unité d'alimentation d'énergie électrique (5) indépendante du réseau, dans lequel le convertisseur de courant (2, 20, 52, 62) comprend un circuit intermédiaire (8) et au moins un onduleur (9, 10), l'onduleur (9, 10) étant raccordé à un premier conducteur (23) du circuit intermédiaire (8) pour l'alimentation en tension positive et à un second conducteur (24) du circuit intermédiaire (8) pour l'alimentation en tension négative, l'onduleur (9, 10) étant conçu pour alimenter l'entraînement (26, 27) du véhicule en tension alternative, dans lequel une première ligne de raccordement (38, 45) de la seconde borne est reliée au premier ou au second conducteur (23, 24) du circuit intermédiaire (8) par l'intermédiaire d'un moyen de découplage (32, 54), et dans lequel une seconde ligne de raccordement de la seconde borne (38, 45) est reliée au second ou au premier conducteur (23, 24) du circuit intermédiaire (8), dans lequel le convertisseur de courant (2, 20, 52, 62) comprend au moins un redresseur (6, 7), le redresseur (6, 7) reliant les premières bornes au premier et au second conducteurs (23, 24) du circuit intermédiaire (8),
**caractérisé en ce que** la première ligne de raccordement (38, 45) est reliée à une première ligne de liaison (29), dans lequel la première ligne de liaison (29) relie le premier conducteur (23) du circuit intermédiaire (8) au second conducteur (24) du circuit intermédiaire (8), la première ligne de liaison (29) comprend un montage en série de deux bobines d'arrêt (31, 32) et un condensateur (30) connecté en série avec le montage en série des deux bobines d'arrêt, et dans lequel la première ligne de raccordement (38, 45) est connectée à la première ligne de liaison (29) entre les deux bobines d'arrêt (31, 32).

2. Agencement de circuit selon la revendication 1, dans lequel le moyen de découplage est configuré sous forme d'une bobine d'arrêt (32, 54).

3. Agencement de circuit selon la revendication 1 ou 2, dans lequel le montage en série (8) des deux bobines d'arrêt (31, 32) est relié au premier conducteur (23) du circuit intermédiaire par l'intermédiaire d'un premier commutateur (33), et dans lequel, entre les deux bobines d'arrêt (31, 32), une ligne de liaison (34) supplémentaire est reliée au premier conducteur (23) par l'intermédiaire d'un commutateur supplémentaire (35).

4. Agencement de circuit selon la revendication 1, dans lequel la seconde ligne de raccordement (18, 45) est reliée à une première ligne de liaison (29), dans lequel la première ligne de liaison (29) relie le premier conducteur (23) du circuit intermédiaire (8) au second conducteur (24) du circuit intermédiaire (8), la première ligne de liaison (29) comprend un montage en série de deux bobines d'arrêt (31, 32) et un condensateur (30) connecté en série avec le montage en série des deux bobines d'arrêt, et dans lequel la seconde ligne de raccordement (38, 45) est connectée à la première ligne de liaison (29) entre les deux bobines d'arrêt (31, 32).

5. Agencement de circuit selon la revendication 4, dans lequel le montage en série des deux bobines d'arrêt (31, 32) est connecté au second conducteur (24) du circuit intermédiaire (8) par l'intermédiaire d'un premier commutateur (33), et dans lequel, entre les deux bobines d'arrêt (31, 32), une ligne de liaison supplémentaire (34) est reliée au second conducteur (23) par l'intermédiaire d'un commutateur supplémentaire (35).

6. Agencement de circuit selon l'une des revendications 1 à 5, dans lequel la première ligne de raccordement (38) ou la seconde ligne de raccordement (45) est reliée au premier ou au second conducteur (24) du circuit intermédiaire (8) par l'intermédiaire d'une diode (50).

7. Agencement de circuit selon la revendication 6, dans lequel la diode (50) est conçue sous forme d'une diode (50) d'un redresseur (6, 7), notamment d'une diode de roue libre d'un organe de réglage à quatre quadrants.

8. Agencement de circuit selon l'une des revendications précédentes, dans lequel un second redresseur (7) est agencé en parallèle avec le redresseur (6), et dans lequel les deux redresseurs (6, 7) alimentent le circuit intermédiaire (8) en courant du réseau (4).

9. Agencement de circuit selon la revendication 1, dans lequel le premier ou le second conducteur (23, 24) du circuit intermédiaire (8) comprend une bobine d'arrêt (54, 55) entre la première ligne de liaison (29) et le redresseur (6, 7).

10. Agencement de circuit selon la revendication 9, dans lequel une seconde bobine d'arrêt (55) est disposée dans le premier conducteur (23) ou dans le second conducteur (24), une ligne de liaison supplémentaire (29) est raccordée au premier ou au second conducteur entre les bobines d'arrêt (54, 55), la ligne de liaison supplémentaire (29) comprend un condensateur (56), et la ligne de liaison supplémentaire (29) est reliée au second ou au premier conducteur (23, 24).

11. Agencement de circuit selon l'une des revendications précédentes, dans lequel une seconde ligne de liaison (41) entre le premier et le second conducteur (23, 24) est prévue, dans lequel la seconde ligne de liaison (41) comprend un condensateur (42), dans lequel une troisième ligne de liaison (39) entre le premier et le second conducteur (23, 24) est prévue, la troisième ligne de liaison (39) comprenant un dispositif de protection (40), dans lequel le dispositif de protection (40) est conçu pour être non conducteur en présence de tensions entre le premier et le second conducteurs (23, 24) inférieures à un seuil prédéterminé, et dans lequel le circuit de protection est conçu pour produire une liaison de court-circuit conductrice entre le premier et le second conducteurs (23, 24) en présence de tensions supérieures au seuil prédéterminé.
